Europäisches Patentamt

European Patent Office

Office européen des brevets

(19)

(11) **EP 1 197 092 B1**

(12) **FASCICULE DE BREVET EUROPEEN**

(45) Date de publication et mention
de la délivrance du brevet:
**10.12.2003 Bulletin 2003/50**

(21) Numéro de dépôt: **00940488.0**

(22) Date de dépôt: **09.06.2000**

(51) Int Cl.$^7$: **H04N 7/30**, H04N 7/36

(86) Numéro de dépôt international:
**PCT/FR00/01613**

(87) Numéro de publication internationale:
**WO 00/078052 (21.12.2000 Gazette 2000/51)**

(54) **DECODEUR VIDEO OPTIMAL BASE SUR LES STANDARDS DE TYPE MPEG**

OPTIMALER MPEG-STANDARDVIDEODEKODER

OPTIMAL VIDEO DECODER BASED ON MPEG-TYPE STANDARDS

(84) Etats contractants désignés:
**AT BE CH CY DE DK ES FI FR GB GR IE IT LI LU
MC NL PT SE**

(30) Priorité: **11.06.1999 FR 9907443**

(43) Date de publication de la demande:
**17.04.2002 Bulletin 2002/16**

(73) Titulaire: **CENTRE NATIONAL DE
LA RECHERCHE SCIENTIFIQUE (CNRS)
75794 Paris Cedex 16 (FR)**

(72) Inventeurs:
• **BARLAUD, Michel
F-06560 Valbonne (FR)**
• **ANTONINI, Marc
F-06200 Nice (FR)**
• **JUNG, Joel
F-06600 Antibes (FR)**

(74) Mandataire: **Breese, Pierre
3, avenue de l'Opéra
75001 Paris (FR)**

(56) Documents cités:
EP-A- 0 626 790          EP-A- 0 634 872
EP-A- 0 652 524          EP-A- 0 786 904

• STILLER C ET AL: "REGION-ORIENTED CODING
OF MOVING VIDEO - COMPATIBLE QUALITY
IMPROVEMENT BY OBJECT-MASK
GENERATION" PROCEEDINGS OF THE
EUROPEAN SIGNAL PROCESSING
CONFERENCE,NL,AMSTERDAM, ELSEVIER,
vol. CONF. 5, 1990, pages 777-780, XP000365708
• CHARBONNIER P ET AL: "DETERMINISTIC
EDGE-PRESERVING REGULARIZATION IN
COMPUTED IMAGING" IEEE TRANSACTIONS
ON IMAGE PROCESSING,US,IEEE INC. NEW
YORK, vol. 6, no. 2, 1 février 1997 (1997-02-01),
pages 298-311, XP000642468 ISSN: 1057-7149
• NERI A ET AL: "VIDEO SEQUENCE
SEGMENTATION FOR OBJECT-BASED
CODERS USING HIGHER ORDER STATISTICS"
IEEE INTERNATIONAL SYMPOSIUM ON
CIRCUITS AND SYSTEMS,US,NEW-YORK, NY:
IEEE, 1997, pages 1245-1248, XP000832429
ISBN: 0-7803-3584-8
• YONGYI YANG ET AL: "REGULARIZED
RECONSTRUCTION TO REDUCE BLOCKING
ARTIFACTS OF BLOCK DISCRETE COSINE
TRANSFORM COMPRESSED IMAGES" IEEE
TRANSACTIONS ON CIRCUITS AND SYSTEMS
FOR VIDEO TECHNOLOGY,US,IEEE INC. NEW
YORK, vol. 3, no. 6, 1 décembre 1993
(1993-12-01), pages 421-432, XP000422543 ISSN:
1051-8215

**Description**

L'invention concerne le domaine de l'affichage d'images animées et en particulier la décompression de données numériques comportant de telles images par des méthodes optimisées.

Avec l'apparition des dernières technologies numériques d'une part, et le besoin sans cesse croissant de vitesse et d'espace de stockage d'autre part, la compression est devenue incontournable pour les applications grand public. Citons à titre d'exemples les appareils-photos numériques, qui codent les images en JPEG, les caméscopes numériques, qui compressent les séquences au format DV, un dérivé de M-JPEG, ou encore la télévision numérique et le DVD, qui ont adopté le format de compression MPEG-2, sans oublier bien sûr le réseau Internet, où images et séquences transitent compressées.

Dans certains cas, l'utilisateur exige une qualité irréprochable (photos, caméscopes), ce qui implique des taux de compression très bas. Dans d'autres cas, les temps de transfert excessifs interdisent une qualité convenable. C'est pourquoi il est nécessaire d'améliorer le décodage des séquences pour permettre, soit une meilleure qualité à débit équivalent, soit un débit plus faible, à qualité égale ou supérieure.

Différentes normes de compression des images animées ont été proposées, mais seule la norme MPEG s'est véritablement imposée. Cette norme de compression et de décompression des séquences animées entraîne l'apparition d'effets de bloc.

On connaît déjà l'article "Region-oriented coding of moving video-compatible qulity improvement by object-mask generation" issu de la conférence européenne sur le traitement du signal, Amsterdam (NL), Elsevier, vol. CONF. 5, 1990, pages 777-780, XP000365708 par STILLER C et AL qui décrit des opérations de filtre qui sont classiquement réalisées postérieurement.

Par exemple le brevet européen EP539833 concerne un procédé destiné à produire une représentation de données vidéo compressées qui peuvent être affichées après décompression sur un écran vidéo suivant une multiplicité d'échelles hiérarchiques de résolutions d'images et/ou de qualité, comprenant les étapes consistant à :

- fournir des signaux de données d'éléments d'image vidéo indicatifs d'unités de blocs dans l'espace ou macro-blocs, lesdits macro-blocs se voyant associer des informations concernant les données d'images compressées et un ensemble d'attributs de codage, comprenant des décisions de codage, des vecteurs de compensation de mouvement, et des paramètres de quantification, et
- produire pour chacun desdits macro-blocs, un macro-bloc mis à l'échelle correspondant pour chaque échelle de ladite multiplicité de sorte que les mêmes attributs de codage soient partagés par lesdits macro-blocs mis à l'échelle.

Des méthodes permettant de corriger les erreurs de décompression ont été proposées dans l'art antérieur. Ces méthodes concernent essentiellement des techniques utilisées après la décompression des images proprement dite et ralentissant ladite décompression. Ces méthodes ne prennent pas en compte le quantificateur et ne permettent pas de conserver la trame binaire après recompression, ce qui a pour effet de dégrader la qualité de l'image à chaque compression. Un objectif de l'invention est de proposer un procédé améliorant la qualité de l'image pendant la décompression.

L'invention concerne un procédé de décompression d'images animées compressées par une méthode comportant un traitement des images par blocs et comprenant une étape de recomposition des données numérisées définissant des formes prédéfinies, une étape de modélisation du mouvement desdites formes utilisant un processus de prédiction, d'interpolation et de compensation temporelle, une étape de composition de l'image à partir des éléments reconstruits, du type Motion-JPEG, ou MPEG. L'étape de recomposition des formes comporte un processus de séparation des formes fixes des formes mobiles, un processus d'enregistrement des données numériques correspondant aux formes fixes traitées par un filtre indissociable des processus mis en oeuvre dans l'étape de recomposition dans une première mémoire spécifique et des données numériques correspondant aux formes mobiles dans une deuxième mémoire spécifique.

Avantageusement, le filtre numérique est irréductible et ne comporte pas de filtres dissociables. Le filtre élimine dans une variante les effets de bloc sur l'image de fond. Il peut effectuer une régularisation de l'image de fond. De manière avantageuse, on mémorise l'intervalle de quantification utilisé lors de la compression de l'image de fond et on effectue une projection sur l'intervalle de quantification.

Dans une variante, la reconstruction des éléments utilise des paramètres de quantification définis préalablement par le codeur, lors de la compression des images. Ces paramètres sont liés aux moyens de prises de vue des images et permettent d'adapter la décompression en fonction de ces moyens. Ceci permet de tenir compte des caractéristiques de compression et d'améliorer la décompression des images. Dans une variante, les paramètres de quantification sont définis par la fonction de transfert des moyens d'acquisition et de mémorisation des images animées.

Avantageusement, un second filtre numérique sépare et identifie les éléments mobiles en objets mobiles se déplaçant dans une séquence, selon l'évolution de critères numériques prédéterminés, tels que la géométrie des objets mobiles, le mouvement des objets mobiles, ou la segmentation spatiale des objets mobiles. On peut également effectuer un moyennage temporel avec compensation du mouvement sur chaque objet identifié. Le filtre élimine dans une variante les effets de bloc sur les objets. Suivant ce procédé on peut également effectuer une régularisation sur les objets identifiés.

Avantageusement, on mémorise l'intervalle de quantification ayant servi à compresser la séquence animée et on effectue une projection sur l'intervalle de quantification. Lors de l'affichage, on superpose les objets mobiles et la représentation moyenne dans le temps des images fixes.

De manière préférentielle, on mémorise séparément les paramètres spécifiques à chaque objet identifié afin d'effectuer un traitement différent sur chaque objet.

L'invention concerne également un dispositif de décompression d'images animées compressées par une méthode comportant un traitement des images par blocs et comprenant une étape de recomposition des données numérisées définissant des formes prédéfinies, une étape de modélisation du mouvement desdites formes utilisant des moyens de prédiction, d'interpolation et de compensation temporelle, une étape de composition de l'image à partir des éléments reconstruits, du type Motion-JPEG, ou MPEG. Il comporte des moyens de séparation des formes fixes des formes mobiles, et des moyens d'enregistrement des données numériques correspondant aux formes fixes traitées par un filtre indissociable des moyens mis en oeuvre dans l'étape de recomposition dans une première mémoire spécifique et des données numériques correspondant aux formes mobiles dans une deuxième mémoire spécifique.

Ce dispositif comporte avantageusement des moyens de filtrage numérique irréductibles, qui ne peuvent être décomposés en une séquence de filtres indépendants les uns des autres.

De manière préférentielle, il comporte des moyens de mémorisation du type d'images compressées.

Dans une variante, ce dispositif comprend un support amovible et peut être constitué par une puce indépendante ou une carte graphique insérable dans un ordinateur. Ce dispositif peut également être inséré de manière indissociable dans un ordinateur ou dans tout type d'appareil électronique permettant d'afficher des images.

Ce dispositif peut également être constitué par un module logiciel indépendant des logiciels présents dans la mémoire d'un calculateur.

L'invention consiste en un procédé de décodage pour réduire à la fois les effets de bloc et les défauts liés à une dégradation du support de la séquence.

Cette méthode traite le problème spatialement et temporellement, pour obtenir une amélioration significative de qualité de la séquence, et repose sur deux idées :

- traiter simultanément les problèmes de suppression de blocs et de segmentation du mouvement,
- intégrer la notion d'objet, afin de permettre une approche différente pour le traitement du fond et de chaque objet.

De plus, cette méthode présente la particularité de traiter efficacement le problème des "drop-out", quel que soit le format de la séquence originale : les blocs d'image perdus à l'acquisition par la caméra, ou lors de la transmission sont parfaitement restitués; les défauts tels que rayures, fils, sur films numérisées sont supprimés. D'autre part, il est possible d'intégrer au processus de décodage la prise en compte de la fonction de transfert de l'objectif de la caméra, ou du projecteur, pour obtenir une restitution plus fidèle. Enfin, le schéma proposé reste valide dans le cadre du décodage MPEG-4.

La méthode proposée utilise une approche objet, par l'intermédiaire de deux étapes distinctes. Tout d'abord, le fond de la séquence est isolé et les effets de bloc y sont supprimés. Les objets sont peu à peu isolés du fond en bénéficiant de sa représentation plus précise à chaque étape. Ensuite, chaque objet est traité indépendamment, selon ses propres caractéristiques, puis finalement projeté sur l'image de fond estimée, pour reconstruire la séquence.

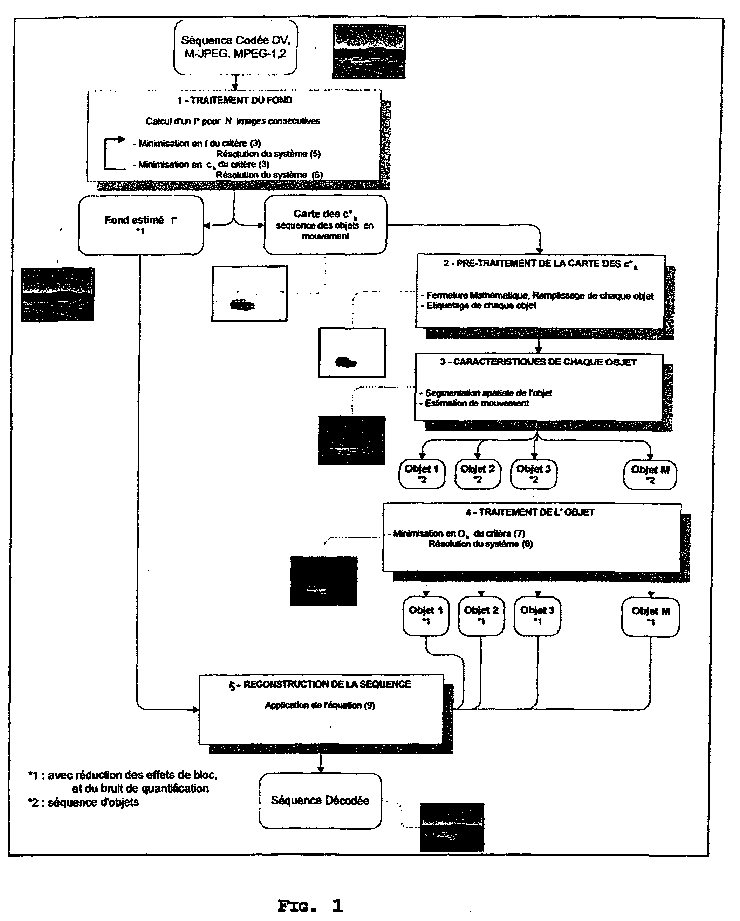

La figure 1 représente les étapes de ce procédé.

Une première étape (1) consiste à effectuer une estimation et un traitement du fond de l'image, ainsi qu'à identifier les éléments en mouvement. Une carte de ces éléments en mouvement est transmise aux moyens de traitement de ces éléments.

L'étape (2) consiste à effectuer un pré-traitement de cette carte en étiquetant et en complétant chaque élément.

L'étape (3) consiste à effectuer une segmentation spatiale des différents éléments permettant d'identifier les différents objets en mouvement. Cette étape permet également d'estimer ce mouvement, et de réaliser le suivi des objets au cours de la séquence.

L'étape (4) traite spécifiquement chaque objet identifié suivant les méthodes explicitées ci-dessous.

L'étape (5) consiste en la reconstruction de la séquence qui permet d'obtenir la séquence décodée.

L'estimation du fond est considérée comme un problème inverse. Soit $p_k$ N images de la séquence MPEG ou M-JPEG contenant les effets de bloc. On trouve simultanément le fond estimé, et la séquence des objets en mouvement, appelée $c_k$.

On souhaite $c_k=0$ si le point appartient à un objet en mouvement, sinon $c_k=1$. On cherche

$$f^* = \arg\min(J_\lambda)$$

avec comme critère

$$J_\lambda(f,c_1,...,c_N)=J_1(f,c_1,...,c_N)+\lambda^2\,J_2(f)+\gamma^2 J_3(c_k)$$

avec

$$J_1(f,c_1,...,c_N)=\sum_{k=1}^{N}\int_\Omega c_k^2(f-p_k)^2+\alpha_c\sum_{k=1}^{N}\int_\Omega (c_k-1)^2$$

qui réalise une segmentation spatio-temporelle en utilisant N images consécutives de la séquence, et

$$J_2(f)=\int_\Omega \varphi_1(\|\nabla f\|), \qquad\qquad (1)$$

$$J_3(c_k)=\int_\Omega \varphi_2(\|\nabla c_k\|) \qquad\qquad (2)$$

les termes de régularisation contenant les a-priori sur la solution. $\varphi_1$ et $\varphi_2$ sont des fonctions potentiel qui préservent les discontinuités dans l'image. Le paramètre $\alpha_c$ détermine l'importance que l'on accorde au fond : plus $\alpha_c$ est petit, plus il y a d'objets en mouvement détectés.

Concernant $J_1(f)$, si $p_k$ est éloigné de l'estimée courante $f$, $c_k$ devra être petit : on se trouve sur un objet qui se déplace.

Ceci constitue un type d'approche classique pour la segmentation spatio-temporelle des séquences. Cependant, cette méthode n'agit pas sur les effets de bloc issus de la DCT, et ne considère pas les caractéristiques du codeur. Le traitement spécifique à l'invention permet de répondre à ce problème.

Pour prendre en compte le quantificateur et supprimer simultanément les effets de bloc lors de l'extraction du fond $f$, on minimise le nouveau critère :

$$J(f,c_1,...,c_N)=J_1(f,c_1,...,c_N)+\lambda_1^2 J_2(f)+\gamma_1^2 J_3(f)+\eta_1^2 J_4(f)+\mu_1^2 J_5(f) \qquad (3)$$

avec

$$J_4(f)=\int_\Omega \Psi\left(\frac{|Rf|}{\delta}\right) \qquad\qquad (4)$$

où $R$ est la transformée en ondelettes, $\Psi$ une fonction potentiel, et $\delta$ un seuil dépendant de l'amplitude des effets de bloc. La valeur de $\eta_1$ précise quels sont les coefficients d'ondelettes à seuiller. Un seuillage doux dans le domaine spatio-fréquentiel des ondelettes est réalisé.

La connaissance précise de la matrice de quantification utilisée lors du codage permet de restreindre chaque pixel de la séquence reconstruite dans un intervalle qui correspond à l'intervalle de quantification

La quantification est une opération de discrétisation qui transforme un ensemble continu de valeurs d'échantillons en un ensemble discret. Elle peut être effectuée sur un seul échantillon à la fois (quantification scalaire) ou sur plusieurs échantillons regroupés en blocs (quantification vectorielle). La contrainte correspondant à cette projection est :

$$J_s(f) = \frac{1}{4}\iint_\Omega \left( \left| Df - p_k + \frac{q}{2} \right| - Df + p_k - \frac{q}{2} \right)^2 + \frac{1}{4}\iint_\Omega \left( \left| Df - p_k - \frac{q}{2} \right| - Df - p_k - \frac{q}{2} \right)^2$$

avec $D$ l'opérateur DCT, $p_k$ le coefficient DCT quantifié, $q$ le pas de quantification au pixel considéré.

La solution $f^*$ optimale à ce problème de minimisation est trouvée pour $\frac{\partial J_{\lambda_1}}{\partial f}=0$, équivalent à :

$$\sum_{k=1}^N c_k^2 (f - p_k) - \lambda_1^2 div\left( \frac{\varphi_1'(|\nabla f|)}{|\nabla f|}\nabla f \right) + \eta_1^2 R^T \frac{\Psi'(|Rf|/\delta)}{|Rf|/\delta}Rf + \mu_1^2 D^T \kappa(f) = 0 \qquad (5)$$

avec

$$\kappa(f) = \begin{cases} Df - p_k + \dfrac{q}{2} & si & Df < p_k - \dfrac{q}{2} \\[2mm] Df - p_k - \dfrac{q}{2} & si & Df > p_k + \dfrac{q}{2} \\[2mm] 0 & si & Df \in \left[ p_k - \dfrac{q}{2}; p_k + \dfrac{q}{2} \right] \end{cases}$$

Les cartes d'objets $c_k$ optimales sont obtenues pour $\frac{\partial J_{\lambda_1}}{\partial c_k}=0$, ce qui donne l'équation :

$$\sum_{k=1}^N c_k (f - p_k)^2 + \alpha_c \sum_{k=1}^N (c_k - 1) - \gamma_1^2 div\left( \frac{\varphi_1'(|\nabla c_k|)}{|\nabla c_k|}\nabla c_k \right) = 0 \qquad (6)$$

La solution du problème est donnée par la réalisation de deux optimisations successives :

La minimisation de (5) en $f$, pour $c_k$ donné $\rightarrow f^*$
La minimisation de (6) en $c_k$, pour $f^*$ donné $\rightarrow c^*_k$

On itère alors ces deux optimisations en recherchant un nouveau fond $f^*$, puis de nouveaux $c_k^*$, jusqu'à convergence de la solution.

La résolution du critère est effectuée par un algorithme de résolution semi-quadratique décrit dans l'article "*Deterministic Edge-Preserving Regularization in Computed Imaging*", *IEEE Transaction on Image Processing*, vol. 5, No. 12, Fevrier 1997., basé sur des minimisations alternées. D'autres méthodes peuvent être utilisées.

Ce nouveau critère supprime donc les effets de bloc sur le fond, et réalise simultanément la segmentation des objets en mouvement.

Ce critère fournit une séquence de cartes d'éléments en mouvement. Afin de pouvoir traiter chaque élément séparément, il va falloir les isoler spatialement les uns des autres. Cependant, plus les effets de bloc sont nombreux dans la séquence originale, plus les cartes de $c_k$ présentent des informations fausses ou de mauvaise qualité. Par exemple, un bloc DCT dont l'intensité change d'une image sur l'autre pourra être considéré comme un objet en mouvement. Quelques pré-traitements sont donc nécessaires avant d'isoler chaque élément :

- Seuillage de la carte des $c_k$. Les valeurs dont l'intensité est inférieure à un seuil donné sont ramenés à 0, les autres à 1.
- Fermeture mathématique et remplissage de chaque objet. On réalise une fermeture mathématique, c'est à dire une dilatation suivie d'une érosion, par un élément structurant de taille nxn, de manière préférentielle avec n=3. Le remplissage de l'élément se fait par une méthode classique de parcours d'image. D'autres méthodes peuvent être utilisées, comme les contours géodésiques actifs.
- Ouverture mathématique et suppression de certains objets. L'ouverture consiste à faire une érosion suivie d'une dilatation, pour supprimer les faux éléments provenant des blocs de la DCT. D'autres méthodes peuvent également être mises en oeuvre.

A partir de ces $c_k$, il est possible d'étiqueter chaque élément, de les isoler les uns des autres et de les considérer comme des objets. Dorénavant, chaque traitement décrit sera réalisé indépendamment sur chaque objet.

Pour chaque objet de la séquence, on va déterminer certaines caractéristiques, qui vont permettre un traitement détaillé et adapté :

- Evolution de la taille, hauteur et largeur moyenne, position, barycentre, dans la séquence.
- Informations de segmentation spatiale de l'objet. Il s'agit, pour un objet donné, de le segmenter spatialement, pour déterminer les différentes zones qu'il contient (discontinuités, zones homogènes...). Des méthodes classiques de segmentation spatiale d'images fixes peuvent être utilisées.
- Estimation de mouvement de l'objet, par des méthodes classiques de type "bloc-matching", ou flot optique. Cette estimation de mouvement fournit pour chaque objet, et pour chaque image $i$ de la séquence, un vecteur mouvement $d=(dx_i, dy_i)$.

Maintenant que chaque objet est isolé, et que son mouvement est connu, on peut le traiter de manière adaptée, pour supprimer les effets de bloc qu'il contient. Cette phase peut être réalisée en parallèle sur chaque objet, pour optimiser la vitesse d'exécution.

Pour chaque objet, on cherche

$$O_k^* = \arg\min\left(J_{\lambda_2}\right)$$

avec

$$J_{\lambda_2}(O_k) = J_1(O_k) + \lambda_2^2 J_2(O_k) + \eta_2^2 J_3(O_k) + \mu_2^2 J_4(O_k) \tag{7}$$

où :

- $$J_1(O_k) = \sum_{i=-n}^{n} \int_{\Omega} (c_k - 1)^2 (O_k - p_{k+i}(x + dx_{k+i}, y + dy_{k+i}))^2$$

réalise un moyennage temporel sur l'objet, avec compensation de mouvement. La valeur de $n$ dépend des caractéristiques de l'objet, notamment de sa non-stationnarité. Plus l'objet évolue rapidement au cours du temps, plus $n$ sera choisi petit.

- $$J_2(O_k) = \int_{\Omega} (c_k - 1)^2 \varphi_3\left(\|\nabla O_k\|\right)$$

régularise l'objet. $\lambda_2$ est adaptatif : il dépend de la segmentation spatiale choisie pour déterminer les différentes zones de l'objet, et permet de traiter l'objet de manière adaptée.

- $$J_3(O_k) = \int_{\Omega} (c_k - 1)^2 \Psi\left(\frac{|RO_k|}{\delta}\right),$$

supprime les effets de bloc sur l'objet.

- $$J_4(O_k) = \frac{1}{4}\int_{\Omega}(c_k-1)^2\left(\left|DO_k - p_k + \frac{q}{2}\right| - DO_k + p_k - \frac{q}{2}\right)^2 + \frac{1}{4}\int_{\Omega}(c_k-1)^2\left(\left|DO_k - p_k - \frac{q}{2}\right| - DO_k - p_k - \frac{q}{2}\right)^2$$

permet de restreindre chaque pixel de chaque objet à l'intervalle de quantification, pour réduire le bruit de quantification sur l'objet.

La solution $O_k^*$ optimale est obtenue pour $\frac{\partial J_{\lambda_2}}{\partial O_k}=0$, équivalent à :

$$\left(c_k - 1\right)^2 \left( \sum_{i=-n}^{n} (O_k - p_{k+i}) - \lambda_2^2 div\left( \frac{\varphi_3'\left(|\nabla O_k|\right)}{|\nabla O_k|}\nabla O_k \right) + \eta_2^2 R^T \frac{\Psi'\left(|RO_k|/\delta\right)}{|Rf|/\delta}RO_k + \mu_2^2 D^T \kappa(O_k) \right) = 0$$

$$(8)$$

avec

$$\kappa(O_k) = \begin{cases} DO_k - p_k + \dfrac{q}{2} & si & DO_k < p_k - \dfrac{q}{2} \\ DO_k - p_k - \dfrac{q}{2} & si & DO_k > p_k + \dfrac{q}{2} \\ 0 & \cdot \ si & DO_k \in \left[ p_k - \dfrac{q}{2}; p_k + \dfrac{q}{2} \right] \end{cases}$$

La méthode de résolution utilisée pour résoudre l'équation (8) est identique à celle utilisée précédemment.

La méthode présentée peut être simplifiée, afin de réduire sa complexité, et donc le temps de calcul.

Simplification lors de l'estimation du fond et des $c_k$

Une première simplification consiste à poser $\eta_1 = 0$ dans l'équation (3). Le seuillage des coefficients d'ondelette peut dans ce cas être réalisé comme un pré-traitement sur chaque image en entrée de la séquence. On pose également $\mu_1 = 0$ dans (3), la contrainte d'intervalle pouvant être mise en oeuvre par une projection sur les intervalles de quantification. La conséquence de cette simplification est une diminution importante du temps de calcul, au prix d'une légère diminution de qualité.

La deuxième simplification consiste à supprimer la régularisation sur les $c_k$, c'est à dire poser $\gamma_1 = 0$ dans (3). Pour obtenir la séquence des $c_k$, on résout

$$\left. \frac{\partial J_\lambda}{\partial c_k} \right|_{\gamma_1 = 0} = 0$$

(cf. équation (6)). On obtient alors une formule explicite $c_k^* = \dfrac{\alpha_c}{\alpha_c + (f - p_k)^2}$ qui permet de calculer la séquence des objets en mouvement.

L'équation (7) peut être simplifiée :

-    en posant $\lambda_2^2 = 0$ dans (7), on supprime la régularisation sur l'objet. Dans ce cas, on effectue uniquement un moyennage temporel sur l'objet, avec compensation de mouvement.
-    en posant $\eta_2 = 0$ dans l'équation (7), et en réalisant le seuillage comme un pré-traitement sur chaque objet.
-    en posant $\mu_2 = 0$ dans (7), et en réalisant la projection sur les intervalles de quantification sur chaque objet.

En cumulant certaines de ces simplifications, l'algorithme devient très rapide, et peut s'adapter aux applications temps réel.

La séquence décodée $\tilde{p}$ est reconstruite en utilisant une image de fond sur une durée de $N$ images, et en y projetant les $M$ objets :

$$\tilde{p}_k = c_k^{*2} f^* + \left(c_k^* - 1\right)^2 O_k^*$$

$$(9)$$

Si pour un pixel donné on se trouve sur un objet, $c_k^* = 0$, alors on projette le pixel de $O_k^*$, sinon, $c_k^* = 1$ et l'on projette le pixel du fond $f^*$.

**Revendications**

1.    Procédé de décompression d'images animées compressées par une méthode comportant :

- un traitement des images par blocs consistant à séparer les formes fixes des formes mobiles,
- une étape de modélisation du mouvement desdites formes utilisant un processus de prédiction, d'interpolation et de compensation temporelle,
- une étape de recomposition des données numérisées définissant des formes fixes et des formes mobiles prédéfinies et de composition de l'image à partir des éléments reconstruits, du type Motion-JPEG, ou MPEG,

**caractérisé en ce que** l'étape de recomposition inclue une opération de filtre indissociable de la recomposition, c'est-à-dire que l'opération de filtre a lieu au cours de l'étape de recomposition.

**2.** Procédé de décompression d'images animées selon la revendication 1, **caractérisé en ce que** la recomposition comporte un filtre numérique irréductible.

**3.** Procédé de décompression d'images animées selon la revendication 1 ou 2, **caractérisé en ce que** le filtre effectue une régularisation de l'image de fond.

**4.** Procédé de décompression d'images animées selon l'une quelconque des revendications 1 à 3, **caractérisé en ce que** l'on mémorise l'intervalle de quantification utilisé lors de la compression de l'image de fond et **en ce que** l'on effectue une projection sur l'intervalle de quantification

**5.** Procédé de décompression d'images animées selon l'une quelconque des revendications précédentes, **caractérisé en ce que** la reconstruction des éléments utilise des paramètres de quantification définis préalablement à la compression des images par le codeur.

**6.** Procédé de décompression d'images animées selon la revendication 5, **caractérisé en ce que** les paramètres de quantification sont définis par la fonction de transfert des moyens d'acquisition et de mémorisation des images animées.

**7.** Procédé de décompression d'images animées selon l'une quelconque des revendications précédentes, **caractérisé en ce qu'**un second filtre numérique sépare et identifie les éléments mobiles en objets mobiles se déplaçant dans une séquence.

**8.** Procédé de décompression d'images animées selon la revendication 7, **caractérisé en ce que** l'identification des objets mobiles est effectuée selon l'évolution de critères numériques prédéterminés.

**9.** Procédé de décompression d'images animées selon la revendication 8, **caractérisé en ce que** les critères numériques définissent la géométrie des objets mobiles.

**10.** Procédé de décompression d'images animées selon la revendication 8 ou 9, **caractérisé en ce que** les critères numériques définissent le mouvement des objets mobiles.

**11.** Procédé de décompression d'images animées selon l'une quelconque des revendications 8 à 10, caractérisé en ce les critères numériques définissent la segmentation spatiale des objets mobiles

**12.** Procédé de décompression d'images animées selon l'une quelconque des revendications 7 à 11, **caractérisé en ce que** l'on effectue un moyennage temporel avec compensation du mouvement sur chaque objet identifié.

**13.** Procédé de décompression d'images animées selon l'une quelconque des revendications 7 à 11, **caractérisé en ce que** l'on effectue une régularisation sur les objets identifiés.

**14.** Procédé de décompression d'images animées selon l'une quelconque des revendications 7 à 12, **caractérisé en ce que** l'on mémorise l'intervalle de quantification ayant servi à compresser la séquence animée et **en ce que** l'on effectue une projection sur l'intervalle de quantification.

**15.** Procédé de décompression d'images animées selon l'une quelconque des revendications 7 à 13, **caractérisé en ce que** l'on mémorise séparément les paramètres spécifiques à chaque objet identifié afin d'effectuer un traitement différent sur chaque objet.

**16.** Procédé de décompression d'images animées selon l'une quelconque des revendications précédentes, **caracté-**

**risé en ce que** l'on superpose les objets mobiles et la représentation moyenne dans le temps des images fixes pour l'affichage de la séquence animée.

17. Dispositif de décompression d'images animées compressées par une méthode comportant un traitement des images par blocs et comprenant une étape de recomposition des données numérisées définissant des formes prédéfinies, une étape de modélisation du mouvement desdites formes utilisant des moyens de prédiction, d'interpolation et de compensation temporelle, une étape de composition de l'image à partir des éléments reconstruits, du type Motion-JPEG, ou MPEG, **caractérisé en ce qu'**il comporte des moyens de séparation des formes fixes des formes mobiles, des moyens d'enregistrement des données numériques correspondant aux formes fixes traitées par un filtre indissociable des moyens mis en oeuvre dans l'étape de recomposition dans une première mémoire spécifique et des données numériques correspondant aux formes mobiles dans une deuxième mémoire spécifique,

18. Dispositif de décompression d'images animées selon la revendication 17 **caractérisé en ce que** la recomposition comporte des moyens de filtrage numérique irréductibles.

19. Dispositif de décompression d'images animées selon la revendication 17 ou 18 **caractérisé en ce qu'**il comporte des moyens de mémorisation du type d'images compressées.

20. Dispositif de décompression d'images animées compressées selon l'une quelconque des revendication 17 à 19 **caractérisé en ce qu'**il comporte un support amovible.

21. Dispositif de décompression d'images animées compressées selon la revendication 20 **caractérisé en ce qu'**il est constitué par une puce indépendante.

22. Dispositif de décompression d'images animées compressées selon la revendication 20 **caractérisé en ce qu'**il est constitué par une carte graphique insérable dans un ordinateur.

23. Dispositif de décompression d'images animées compressées selon l'une quelconque des revendications 17 à 20 **caractérisé en ce qu'**il est constitué par un module logiciel indépendant des logiciels présents dans la mémoire d'un calculateur.

24. Ordinateur comportant un dispositif selon l'une quelconque des revendications 17 à 23.

25. Procédé de décompression d'images animées selon la revendication 1, **caractérisé en ce qu'**il comprend une suppression de blocs.

26. Procédé de décompression d'images animées selon les revendications 11 et 25, **caractérisé en ce que** la segmentation spatiale et la suppression de blocs, notamment de drop-out, sont effectuées de façon conjointe.

27. Procédé de décompression d'images animées selon les revendications 11 et 25, **caractérisé en ce que** la segmentation spatiale est effectuée par une seule fonctionnelle

$$J_\lambda(f,c_1,...,c_N) = J_1(f,c_1,...c_N) + \lambda^2\, J_2(f) + \gamma^2 J_3(c_k)$$

avec

$$J_1(f,c_1,...,c_N) = \sum_{k=1}^{N}\int_\Omega c_k^2(f-p_k)^2 + \alpha_c\sum_{k=1}^{N}\int_\Omega (c_k-1)^2$$

réalisant une segmentation spatio-temporelle en utilisant N images consécutives de la séquence, et

$$J_2(f) = \int_\Omega \varphi_1(\|\nabla f\|)$$

(1)

$$J_3(c_k) = \int_\Omega \varphi_2(\|\nabla c_k\|)$$

$$(2)$$

les termes de régularisation contenant les a-priori sur la solution.

**28.** Procédé de décompression d'images animées selon les revendications 11 et 25, **caractérisé en ce que** la segmentation et la suppression de blocs, notamment de drop-out sont effectuées en minimisant une seule fonctionnelle

$J_\lambda(f,c_1,...,c_N)=J_1(f,c_1,...,c_N)+\lambda^2\,J_2(f)+\gamma^2 J_3(c_k)$

avec

$$J_1(f,c_1,...,c_N) = \sum_{k=1}^{N}\int_\Omega c_k^2(f-p_k)^2 + \alpha_c \sum_{k=1}^{N}\int_\Omega (c_k-1)^2$$

réalisant une segmentation spatio-temporelle en utilisant N images consécutives de la séquence, et

$$J_2(f) = \int_\Omega \varphi_1(\|\nabla f\|),$$

$$(1)$$

$$J_3(c_k) = \int_\Omega \varphi_2(\|\nabla c_k\|)$$

$$(2)$$

les termes de régularisation contenant les a-priori sur la solution.

**29.** Procédé de décompression d'images animées selon les revendications 11 et 25, **caractérisé en ce que** la segmentation et la suppression de blocs, notamment de drop-out, sont effectuées de façon itérative, de telle sorte que l'interaction résultante améliore la qualité de façon itérative.

**30.** Procédé de décompression d'images animées selon la revendication 1, **caractérisé en ce que** la prise en compte de la fonction de transfert de l'objectif de la caméra ou du projecteur autorise la restitution de blocs perdus, par exemple à l'acquisition par la caméra, ou lors de la transmission, et la suppression des défauts, tels que rayures, fils, sur films numérisées.

**Claims**

**1.** A method for decompressing animated images compressed by a method consisting of:

-   processing images blockwise comprising separation of fixed shapes from mobile shapes,
-   a step for modeling the movement of said shapes using a prediction, time interpolation and compensation process,
-   a step for recomposing digitized data defining predefined fixed shapes and mobile shapes, and for composing the image from reconstructed elements of the Motion-JPEG or MPEG type,

**characterized in that** the recomposition step includes a filtering operation indissociable from the recomposition, i.e., the filtering operation takes place during the recomposition step.

**2.** The method for decompressing animated images according to claim 1, **characterized in that** the recomposition includes an irreducible digital filter.

**3.** The method for decompressing animated images according to claim 1 or 2, **characterized in that** the filter performs a regularization of the background image.

4. The method for decompressing animated images according to any of claims 1 to 3, **characterized in that** the quantification interval used is stored during the compression of the background image, and **in that** a projection on the quantification interval is performed.

5. The method for decompressing animated images according to any of the preceding claims, **characterized in that** the reconstruction of the elements uses quantification parameters predefined at the compression of the images by the coder.

6. The method for decompressing animated images according to claim 5, **characterized in that** the quantification parameters are defined by the transfer function of the means for acquiring and storing animated images.

7. The method for decompressing animated images according to any of the preceding claims, **characterized in that** a second digital filter separates and identifies the mobile elements as mobile objects moving in a sequence.

8. The method for decompressing animated images according to claim 7, **characterized in that** the identification of the mobile objects is performed according to the evolution of predetermined numerical criteria.

9. The method for decompressing animated images according to claim 8, **characterized in that** the numerical criteria defines the geometry of the mobile object.

10. The method for decompressing animated images according to claim 8 or 9, **characterized in that** the numerical criteria define the movement of the mobile objects.

11. The method for decompressing animated images according to any of claims 8 to 10, **characterized in that** the numerical criteria define the spatial segmentation of the mobile objects.

12. The method for decompressing animated images according to any of claims 7 to 11, **characterized in that** an average is performed over time with compensation of the movement on each identified object.

13. The method for decompressing animated images according to any of claims 7 to 11, **characterized in that** a regularization is performed on the identified objects.

14. The method for decompressing animated images according to any of claims 7 to 12, **characterized in that** the quantification interval which has been used for compressing the animated sequence, is stored, and **in that** a projection is performed on the quantification interval.

15. The method for decompressing animated images according to any of claims 7 to 13, **characterized in that** parameters specific to each identified object, are stored separately in order to perform a different processing operation on each object.

16. The method for decompressing animated images according to any of the preceding claims, **characterized in that** mobile objects and the average representation over time of the fixed images are superimposed for displaying the animated sequence.

17. A device for decompressing animated images compressed by a method including blockwise processing of the images and comprising a step for recomposing the digitized data defining predefined shapes, a step for modeling the movement of said shapes by using prediction, interpolation and time compensation means, a step for composing the images from reconstructed elements of the Motion-JPEG or MPEG type, **characterized in that** it includes means for separating fixed shapes from mobile shapes, means for recording digital data corresponding to fixed shapes processed by a filter indissociable from the means implemented in the recomposition step in a first specific memory and digital data corresponding to mobile shapes in a second specific memory.

18. The device for decompressing animated images according to claim 17, **characterized in that** the recomposition includes irreducible digital filtering means.

19. The device for decompressing animated images according to claim 17 or 18, **characterized in that** it includes storage means of the compressed image type.

20. The device for decompressing compressed animated images according to any of claims 17 to 19, **characterized in that** it includes a removable medium.

21. The device for decompressing compressed animated images according to claim 20, **characterized in that** it consists of an independent chip.

22. The device for decompressing compressed animated images according to claim 20, **characterized in that** it consists of a graphic card which may be inserted into a computer.

23. The device for decompressing compressed animated images according to any of claims 17 to 20, **characterized in that** it consists of a software module independent of the software packages present in the memory of a computer.

24. A computer including a device according to any of claims 17 to 23.

25. The method for decompressing animated images according to claim 1, **characterized in that** it comprises a suppression of blocks.

26. The method for decompressing animated images according to claims 11 and 25, **characterized in that** the spatial segmentation and the suppression of blocks, notably of drop-out, are performed together.

27. The method for decompressing animated images according to claims 11 and 25, **characterized in that** the spatial segmentation is performed by a single functional

$$J_\lambda(f, c_1, \ldots, c_N) = J_1(f, c_1, \ldots, c_N) + \lambda^2 J_2(f) + \gamma^2 J_3(c_k) \quad (30)$$

with

$$J_1(f, c_1, \ldots, c_N) = \sum_{k=1}^{N} \int_\Omega c_k^2 (f - p_k)^2 + \alpha_\sigma \sum_{k=1}^{N} \int_\Omega (c_k - 1)^2$$

performing a space-time segmentation by using N consecutive images of the sequence, and

$$J_2(f) = \int_\Omega \varphi_1(\nabla f) \qquad\qquad (1)$$

$$J_3(c_k) = \int_\Omega \varphi_2(\nabla c_k) \qquad\qquad (2)$$

the regularization terms containing the a priori on the solution.

28. The method for decompressing animated images according to claims 11 and 25, **characterized in that** the segmentation and the suppression of blocks, notably of drop-out, are performed by minimizing a single functional

$$J_\lambda(f, c_1, \ldots, c_N) = J_1(f, c_1, \ldots, c_N) + \lambda^2 J_2(f) + \gamma^2 J_3(c_k)$$

with

$$J_1(f, c_1, ..., c_N) = \sum_{k=1}^{N} \int_{\Omega} c_k^2 (f - p_k)^2 + \alpha_\sigma \sum_{k=1}^{N} \int_{\Omega} (c_k - 1)^2$$

performing a space-time segmentation by using N consecutive images of the sequence, and

$$J_2(f) = \int_{\Omega} \varphi_1(\nabla f) \qquad (1)$$

$$J_3(c_k) = \int_{\Omega} \varphi_2(\nabla c_k) \qquad (2)$$

the regularization terms containing the a priori on the solution.

29. The method for decompressing animated images according to claim 11 and 25, **characterized in that** the segmentation and the suppression of blocks, notably of drop-out, are performed iteratively in such a way that the resulting interaction enhances the quality iteratively.

30. The method for decompressing animated images according to claim 1, **characterized in that** the taking into account of the transfer function of the objective lens of the camera or of the projector, authorizes the restoration of lost blocks, for example during the acquisition by the camera, or during the transmission, and the suppression of defects such as scratches, lines on digitized films.

**Patentansprüche**

1. Verfahren zum Dekomprimieren komprimierter bewegter Bilder mithilfe einer Methode, die folgende Elemente beinhaltet:

   - eine Bildbearbeitung nach Blöcken, die darin besteht, die feststehenden Formen von den beweglichen Formen zu trennen,
   - eine Modellierungsetappe der Bewegung der besagten Formen, bei der ein Prognose-, Interpolations- und Zeitausgleichsverfahren zum Einsatz kommt,
   - eine Neuanordnungsetappe der digitalen Daten, bei welcher vordefinierte feststehende und bewegliche Formen definiert werden, sowie eine Anordnungsetappe des Bildes aus den rekonstruierten Elementen vom Typ Motion-JPEG oder MPEG,

   **dadurch gekennzeichnet, dass** die Neuanordnungsetappe einen Filtervorgang beinhaltet, der mit der Neuanordnung untrennbar verbunden ist, das heißt, der Filtervorgang findet während der Neuanordnungsetappe statt.

2. Verfahren zum Dekomprimieren von bewegten Bildern nach Anspruch 1, **dadurch gekennzeichnet, dass** die Neuanordung einen nicht reduzierbaren digitalen Filter beinhaltet.

3. Verfahren zum Dekomprimieren von bewegten Bildern nach Anspruch 1 oder 2, **dadurch gekennzeichnet, dass** der Filter eine Regulierung des Hintergrundbildes durchführt.

4. Verfahren zum Dekomprimieren komprimierter bewegter Bilder nach einem der Ansprüche 1 bis 3, **dadurch gekennzeichnet, dass** der bei der Komprimierung des Hintergrundbildes eingesetzte Quantifizierungsintervall gespeichert wird und dass man eine Projizierung auf den Quantifizierungsintervall durchführt.

5. Verfahren zum Dekomprimieren von bewegten Bildern nach irgendeinem der oben angegebenen Ansprüche, **dadurch gekennzeichnet, dass** die Rekonstruktion der
   Elemente Quantifizierungsparameter verwendet, welche vor der Bildkomprimierung durch den Kodierer definiert worden sind.

**6.** Verfahren zum Dekomprimieren von bewegten Bildern nach Anspruch 5, **dadurch gekennzeichnet, dass** die Quantifizierungsparameter durch die Transferfunktion der Erfassungs- und Speichermittel der Bewegten Bilder definiert werden.

**7.** Verfahren zum Dekomprimieren von bewegten Bildern nach irgendeinem der oben angegebenen Ansprüche, **dadurch gekennzeichnet, dass** ein zweiter digitaler Filter die beweglichen Elemente, die sich in einer Sequenz fortbewegen, in Objekte trennt und als solche identifiziert.

**8.** Verfahren zum Dekomprimieren von bewegten Bildern nach Anspruch 7, **dadurch gekennzeichnet, dass** die Identifizierung der beweglichen Objekte nach der Entwicklung vordefinierter digitaler Kriterien erfolgt.

**9.** Verfahren zum Dekomprimieren von bewegten Bildern nach Anspruch 8; **dadurch gekennzeichnet, dass** die digitalen Kriterien die Geometrie der beweglichen Objekte definieren.

**10.** Verfahren zum Dekomprimieren von bewegten Bildern nach Anspruch 8 oder 9, **dadurch gekennzeichnet, dass** die digitalen Kriterien die Bewegung der beweglichen Objekte definieren.

**11.** Verfahren zum Dekomprimieren von bewegten Bildern nach einem der Ansprüche 8 - 10, **dadurch gekennzeichnet, dass** die digitalen Kriterien die Raumsegmentierung der beweglichen Objekte definieren.

**12.** Verfahren zum Dekomprimieren von bewegten Bildern nach irgendeinem der Ansprüche 7 - 11, **dadurch gekennzeichnet, dass** man eine Zeitmittelung mit Bewegungkompensierung an jedem identifizierten Objekt durchführt.

**13.** Verfahren zum Dekomprimieren von bewegten Bildern nach einem der Ansprüche 7 - 11, **dadurch gekennzeichnet, dass** man an den identifizierten Objekten eine Regulierung durchführt.

**14.** Verfahren zum Dekomprimieren von bewegten Bildern nach irgendeinem der Ansprüche 7 - 12, **dadurch gekennzeichnet, dass** man das Quantifizierungsintervall, das zur Komprimierung der Phasensequenz benutzt wurde, speichert und eine Projizierung auf das Qualitifizierungsintervall vornimmt.

**15.** Verfahren zum Dekomprimieren von bewegten Bildern nach einem der Ansprüche 7 - 13, **dadurch gekennzeichnet, dass** man die für jedes identifizierte Objekt spezifischen Parameter getrennt speichert, um für jedes Objekt eine getrennte Bearbeitung vornehmen zu können.

**16.** Verfahren zum Dekomprimieren von bewegten Bildern nach irgendeiner der vorhergehenden Methoden, **dadurch gekennzeichnet, dass** man die beweglichen Objekte und die mittlere zeitliche Darstellung der festen Bilder zum Zweck der Anzeige der Phasensequenz übereinanderlegt.

**17.** Vorrichtung zum Dekomprimieren von komprimierten bewegten Bildern mithilfe einer Methode, die eine Bildbearbeitung nach Blöcken beinhaltet, sowie eine Neuanordnungsetappe der digitalen Daten, wobei vordefinierte Formen definiert werden, eine Modellierungsetappe der Bewegung besagter Formen, wobei Prognose-, Interpolations- und Zeitausgleichsmittel eingesetzt sind, eine Bildanordnungsetappe mithilfe der rekonstruierten Elemente vom Typ Motion-JPEG oder MPEG, **dadurch gekennzeichnet, dass** es Mittel zur Trennung der festen Formen von den beweglichen Formen beinhaltet, Mittel zum Speichern der digitalen Daten, welche den festen Formen die durch einen untrennbar mit den in der Neuanordnungsetappe in einem ersten spezifischen Speicher eingesetzten Mitteln verbundenen Filter bearbeitet wurden, entsprechen, sowie Mittel zum Speichern der digitalen Daten, welche den beweglichen Formen in einem zweiten spezifischen Speicher entsprechen.

**18.** Vorrichtung zum Dekomprimieren von bewegten Bildern nach Anspruch 1, **dadurch gekennzeichnet, dass** die Neuanordnung nicht reduzierbare digitale Filtermittel beinhaltet.

**19.** Vorrichtung zum Dekomprimieren von bewegten Bildern nach Anspruch 17 oder 18, **dadurch gekennzeichnet, dass** sie Speichermitel vom Typ komprimierte Bilder beinhaltet.

**20.** Vorrichtung zum Dekomprimieren komprimierter bewegter Bilder nach irgendeinem der Ansprüche 17 bis 19, **dadurch gekennzeichnet, dass** sie einen abnehmbaren Träger beinhaltet.

**21.** Vorrichtung zum Dekomprimieren komprimierter bewegter Bilder nach Anspruch 20, **dadurch gekennzeichnet, dass** sie aus einem unabhängigen Chip besteht.

**22.** Vorrichtung zum Dekomprimieren komprimierter bewegter Bilder nach Anspruch 20, **dadurch gekennzeichnet, dass** sie aus einer in einen Rechner einzuführenden Grafikkarte besteht.

**23.** Vorrichtung zum Dekomprimieren komprimierter bewegter Bilder nach irgendeinem der Ansprüche 17 bis 20, **dadurch gekennzeichnet, dass** sie aus einem Softwaremodul besteht, das von den im Speicher eines Rechners befindlichen Softwareprogrammen unabhängig ist.

**24.** Rechner mit einer Vorrichtung nach irgendeinem der Ansprüche 17 bis 23.

**25.** Verfahren zum Dekomprimieren von Bewegten Bildern nach Anspruch 1, **dadurch gekennzeichnet, dass** es eine Blocklöschfunktion beinhaltet.

**26.** Verfahren zum Dekomprimieren von bewegten Bildern nach den Ansprüchen 11 und 25, **dadurch gekennzeichnet, dass** die Raumsegmentierung und das Löschen nach Blöcken, insbesondere der Drop-out, gemeinsam erfolgen.

**27.** Verfahren zum Dekomprimieren von bewegten Bildern nach den Ansprüchen 11 und 25, **dadurch gekennzeichnet, dass** die Raumsegmentierung durch eine einzige Funktionalgleichung

$$J_\lambda(f,c_1,...,c_N)=J_1(f,c_1,...,c_N)+\lambda^2\ J_2(f)+\gamma^2 J_3(c_k)$$

erfolgt, mit

$$J_1(f,c_1,...,c_N) = \sum_{k=1}^{N}\int_\Omega c_k^2(f-p_k)^2 + \alpha_c\left|\sum_{k=1}^{N}\int_\Omega(c_k-1)^2\right|$$

wobei eine räumliche und zeitliche Segmentierung unter Verwendung von N aufeinanderfolgenden Bildern der Sequenz erfolgt, und

$$J_2(f) = \int_\Omega \varphi_1\left(\|\nabla f\|\right) \qquad , \qquad\qquad (1)$$

$$J_3(c_k) = \int_\Omega \varphi_2\left(\|\nabla c_k\|\right) \qquad\qquad (2)$$

wobei die Regulierungsbegriffe die Apriori über der Lösung enthalten.

**28.** Verfahren zum Dekomprimieren von Bewegten Bildern nach den Ansprüchen 11 und 25, **dadurch gekennzeichnet, dass** die Blocksegmentierung und -löschung, insbesondere Drop-outs, durch die Minimalisierung einer einzigen Funktionalgleichung
$$J_\lambda(f,c_1,...,c_N)=J_1(f,c_1,...,c_N)+\lambda^2\ J_2(f)+\gamma^2 J_3(c_k)$$
erfolgen, mit

$$J_1(f, c_1, \ldots, c_N) = \sum_{k=1}^{N} \int_{\Omega} c_i^2 (f - p_k)^2 + \alpha_c \sum_{k=1}^{N} \int_{\Omega} (c_k - 1)^2$$

wobei eine räumliche und zeitliche Segmentierung unter Verwendung von N aufeinanderfolgenden Bildern der Sequenz erfolgt, und

$$J_2(f) = \int_{\Omega} \varphi_1 (\|\nabla f\|),$$

$$(1)$$

$$J_3(c_k) = \int_{\Omega} \varphi_2 (\|\nabla c_k\|)$$

$$(2)$$

wobei die Regulierungsbegriffe die Apriori über der Lösung enthalten.

29. Verfahren zum Dekomprimieren von Bewegten Bildern nach den Ansprüchen 11 und 25, **dadurch gekennzeichnet, dass** die Blocksegmentierung und -löschung, insbesondere Drop-outs, iterativ erfolgen, so dass die hieraus resultierende Wechselwirkung die Qualität iterativ verbessert.

30. Verfahren zum Dekomprimieren von Bewegten Bildern nach Anspruch 1, **dadurch gekennzeichnet, dass** die Inbetrachtnahme der Transferfunktion des Kamera- oder Projektorobjektivs eine Wiedergabe von Blöcken ermöglicht, die z.B. bei der Erfassung durch die Kamera oder der Übertragung verloren gegangen sind, sowie die Beseitigung von Mängeln an digitalen Filmen, wie z.B. Kratzer und Fäden.

**FIG. 1**